(19) Europäisches Patentamt
European Patent Office
Office européen des brevets

(11) Publication number: **0 111 791 A2**

(12) **EUROPEAN PATENT APPLICATION**

(21) Application number: 83112060.5

(22) Date of filing: 01.12.83

(51) Int. Cl.³: C 08 L 69/00
C 08 L 71/04, C 08 K 5/52
C 08 K 5/06

(30) Priority: 15.12.82 US 449848

(43) Date of publication of application: 27.06.84 Bulletin 84/26

(84) Designated Contracting States: DE FR GB IT NL

(71) Applicant: GENERAL ELECTRIC COMPANY
1 River Road
Schenectady New York 12305(US)

(72) Inventor: Betts, James Elwood
44 Park Lane
Westport Connecticut 06880(US)

(72) Inventor: Holub, Fred Frank
2263 Preisman Drive
Schenectady New York 12305(US)

(72) Inventor: Abolins, Visvaldis
15 Haddington Lane
Delmar New York 12054(US)

(74) Representative: Catherine, Alain
GETSCO 42, avenue Montaigne
F-75008 Paris(FR)

(54) **Flame retardant thermoplastic polycarbonate composition.**

(57) Thermoplastic compositions suitable for molding and flame retardant applications are described. They are composed of an aromatic polycarbonate resin and a flame retardant system comprised of a polyphenylene ether resin, an aromatic phosphate compound, and a stable brominated compound. The presence of the polyphenylene ether resin serves to enhance the effect of the other flame retardant components and as a result, even better flame retardance is achieved.

EP 0 111 791 A2

Croydon Printing Company Ltd.

335-1599

8CN-3146

0111791

## UNITED STATES PATENT APPLICATION

Of: Visvaldis Abolins, James Elwood Betts and Fred Frank Holub

For: FLAME RETARDANT THERMOPLASTIC POLYCARBONATE COMPOSITIONS

## BACKGROUND OF THE INVENTION

The addition of flame retardant agents to normally flammable thermoplastic polymers to render the latter flame retardant is well known in the plastics art. Among these are flame retardant blends of polyphenylene ether resin and styrene resins, many variations of which are described in the patent literature. Haaf discloses the usefulness of aromatic phosphate compounds and aromatic halogen compounds together as a flame retardant agent for compositions of polyphenylene ether resin and styrene resin, in U.S. Patent No. 3,639,506. Cooper and Katchman, in U.S. Patent No. 4,101,503, disclose impact modified polyphenylene ether resin compositions a preferred feature of which is the inclusion of a flame retardant agent which can be a halogenated organic compound in admixture with a phosphorous compound. Compositions of polyphenylene ether and styrene copolymers containing a flame retardant combination of an aromatic phosphate and an aromatic halogen compound are described in U.S. Patent No. 4,191,685 (to William R. Haaf). Robert Axelrod discloses flame retardant compositions of polyphenylene ether resin, styrene resin and cyclic phosphate having excellent appearance and physical properties after molding, in U.S. Patent No. 4,154,775.

The use of flame retardant additives for other types of plastics, such as polycarbonate resins, is also known in the art as shown by U.S. Patent No. 4,153,595 (to Victor Mark), which discloses the addition of certain metal salts of halogenated methanesulfonic acid. The inclusion of halogenated organic compounds as an enhancing agent for other flame retardants is taught in U.S. Patent No. 4,209,427 (Williams).

Thermoplastic blends of polyphenylene oxide, aromatic polycarbonate and rubber-modified polystyrene which optionally can also contain fire retardants, for example, triphenyl phosphate, are described by Yonemitsu, et al. in U.S. Patent No. 3,963,804.

## INTRODUCTION TO THE INVENTION

The discovery has now been made that when a polyphenylene ether resin, an aromatic phosphate compound and a stable bromine compound of low volatility, together, are incorporated in an aromatic polycarbonate resin or blend of the resin, the resulting composition possesses better flame retardance than the corresponding blend without the polyphenylene ether.

## DESCRIPTION OF THE INVENTION

In general, the compositions of this invention are comprised of a normally flammable aromatic polycarbonate resin and a flame retardant amount of a multicomponent agent comprising a polyphenylene ether resin, an organic phosphate compound, and a bromine containing compound, preferably a brominated bisphenoxy alkane.

Preferably, the polycarbonate resin is selected from among those having the formula

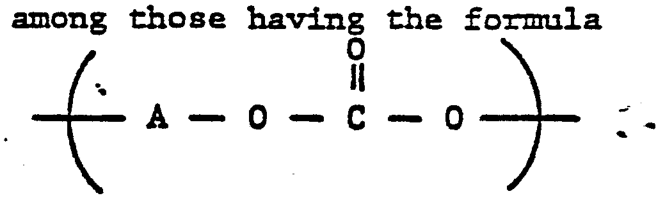

wherein A is a divalent aromatic radical of the dihydric phenol employed in the polymer producing reaction.

In especially preferred embodiments, the polycarbonate is a resin of the formula

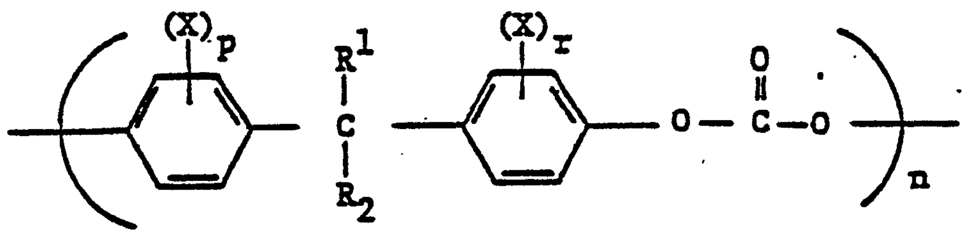

wherein $R^1$ and $R^2$ are, independently, hydrogen, (lower) alkyl or phenyl; X is, independently, (lower) alkyl, chloro, bromo or hydrogen; p and r are, independently, from 0 to 4; and n represents the total number of monomer units and is an integer at least about 30, and more usually, from 40 to 400 or higher. The term "(lower) alkyl" is intended to mean a straight or branched alkyl group having from 1 to about 10, and more frequently, from 1 to about 6 carbon atoms, for example, methyl, ethyl, propyl, butyl, pentyl, hexyl, octyl, nonyl, decyl, isopropyl, isobutyl, trimethyl ethyl methyl, and so forth.

Special mention is made of polycarbonate resins devoid of substituents on the aromatic rings in the polymer chain, i.e., where p and r are zero in the above formula, although this feature is not essential to the successful practice of the invention.

By way of illustration, the terminology "aromatic polycarbonate resin" as employed in this disclosure is meant to include homopolymeric carbonates and copolymeric carbonates, as well as mixtures of the two, in which the polymer or copolymer has a molecular weight (number average) of from about 8,000 to about 200,000 or higher, but preferably from about 10,000 to about 80,000. The preferred polymers will usually be characterized by an intrinsic, i.e., inherent, viscosity within the range from about 0.30 to about 1.0 deciliters per gram (dl/g) as measured in solution in methylene chloride at 25°C. To illustrate further, such polycarbonates may be derived from dihydric phenols such as 2,2-bis(4-hydroxyphenyl) propane; bis(4-hydroxyphenyl) methane; 2,2-bis(4-hydroxy-3-methylphenyl) propane; 4,4-bis(4-hydroxyphenyl) heptane; 2,2-(3,5,3',5'-tetrachloro-4,4'-dihydroxydiphenyl) propane; 2,2-(3,5,3',5'-tetrabromo-4,4'-dihydroxydiphenyl) propane; and bis(3,3'-dichloro-4,4'-dihydroxydiphenyl) methane. Other suitable dihydric phenols are disclosed in U.S. Patent Nos. 2,999,835; 3,028,365; 3,334,154; and 4,131,575.

The above mentioned aromatic polycarbonates can be prepared by use of known processes, such as, for instance, by reacting a dihydric phenol with a carbonate precursor, e.g., phosgene, in accordance with procedures set forth in the patent literature cited above and in U.S. Patent Nos. 4,018,750 and 4,123,436; or by transesterification processes such as those which are disclosed in U.S. Patent No. 3,153,008; as well as other processes known to those skilled in the art.

In addition, the aromatic polycarbonates utilized in the present invention can include polymeric derivatives of a dihydric phenol, a dicarboxylic acid and carbonic acid. A suitable procedure is described in U.S. Patent No. 3,169,121. Branched polycarbonates, such as disclosed in U.S. Patent No. 4,001,184, or mixtures of branched and linear polycarbonates may also be employed in the compositions.

Also encompassed within the scope of this invention are polycarbonates which have been prepared from two or more different dihydric phenols, or from a copolymer of a dihydric phenol with a glycol or acid terminated polyester, or with a dibasic acid in the event that a carbonate interpolymer or copolymer is desired.

A wide variety of aromatic polycarbonates are thus useful in the present composition.

The flame retardant portion of the composition is composed of a flame retardant aromatic phosphate compound, a polyphenylene ether resin enhancing agent, and a brominated bis-phenoxy compound.

The polyphenylene ether resin component of the flame retardant additive may be a homo- or copolymer of the formula

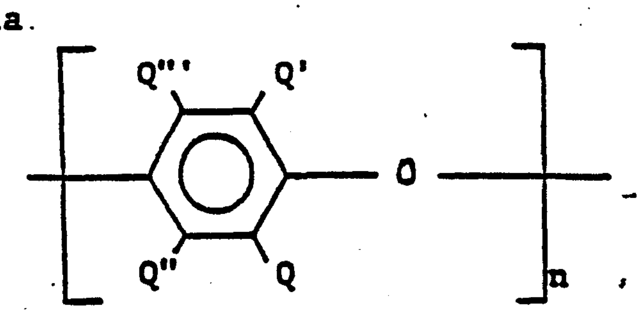

wherein Q, Q', Q" and Q"', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20, and preferably at least 50.

Especially preferred is poly(2,6-dimethyl-1,4-phenylene)ether.

The polyphenylene ether resins useful in the compositions of this invention can be prepared by following known procedures, including those described by Allan Hay in U.S. Patent Nos. 3,306,874 and 3,306,875 and by Gelu Stamatoff in U.S. Patent Nos. 3,257,357 and 3,257,358.

The aromatic phosphate component of the flame retardant additive preferably is a compound having the formula

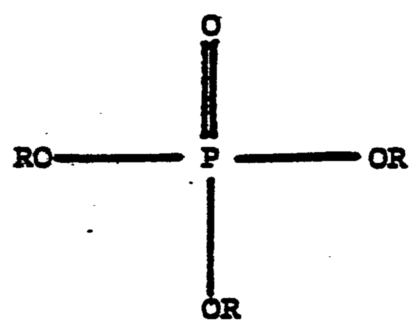

where R is the same or different and is alkyl, cycloalkyl, aryl, alkyl substituted aryl, halogen substituted aryl, aryl substituted alkyl, halogen, hydrogen or a combination of any of the foregoing, provided at least one R is aryl.

Examples include phenylbisdodecyl phosphate, phenylbisneopentyl phosphate, phenylethylene hydrogen phosphate, phenyl-bis(3,5,5'-trimethylhexyl phosphate), ethyldiphenyl phosphate, 2-ethyl-hexyldi(p-tolyl) phosphate, di-phenyl hydrogen phosphate, bis-(2-ethylhexyl) p-tolylphosphate, tritolyl phosphate, bis-(2-ethylhexyl) phenyl phosphate, tri-(nonylphenyl) phosphate, phenylmethyl hydrogen phosphate, di(dodecyl) p-tolyl phosphate, tricresyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, diphenyl hydrogen phosphate, and the like. The preferred phosphates are those in which each Q is aryl. Especially preferred is triphenyl phosphate, which may be either unsubstituted or substituted, for example, isopropylated triphenyl phosphate mixtures.

In general, these two ingredients are supplied in amounts sufficient to provide between about 5 and about 40 percent of the polyphenylene ether resin and between about 1 and about 20 percent of the aromatic phosphate compound, based on the weight of the polycarbonate resin and polyphenylene ether resin combined (i.e., based on the total resin weight).

It has been found, and this constitutes a further preferred feature of the invention, that best results are achieved when the polyphenylene ether resin and the aromatic phosphate compound are present in the compositions in a weight ratio of the two between 8:1 and 2:1.

Small amounts of the bromine containing compound can further enhance the flame retardancy of the present compositions. This compound should be reasonably stable at elevated temperatures above 100°C.

and relatively non-volatile, e.g., having a low volatility at temperatures of 100 to 150°C.

The most favored compounds for purposes of this invention are those of the formula

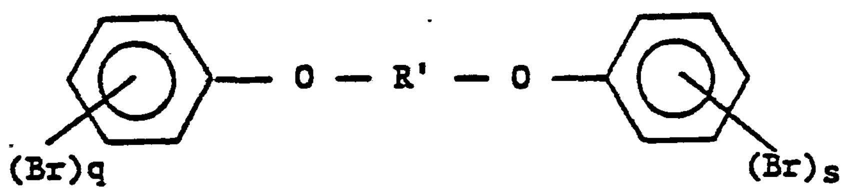

where R' is alkylene, straight or branched, having from 1 to 10 carbon atoms, and more preferably from 1 to about 6 carbon atoms; and q and s represent the total number of bromine atoms on each ring and are independently integers from 1 to 5.

Amounts of between about 1 and about 20 percent by weight, based on the polycarbonate resin, are normally sufficient to decrease the average quenching time and/or to retard the tendency of the composition to drip molten resin, and such amounts are preferred.

Examples of bis-phenoxy compounds useful in the practice of this invention are 1,2-bis(2,4,6-tribromophenoxy)ethane; 1,3-bis(2,4,6-tribromophenoxy) propane; 1,4-bis(2,4,6-tribromophenoxy) butane; and 2,2-bis(4-bromophenoxy) propane. Preferred is 1,2-bis(2,4,6-tribromophenoxy) ethane.

The above compounds are available commercially or can be made by following known procedures, such as those which are described by Arnold Anderson in U.S. Patent No. 4,016,138. By way of illustration, the bis-phenoxy compound may be prepared by reacting a halogenated phenolic with a halogenated alkane in the presence of a base at a temperature of from 40 to 200°C. Suitable bases include alkali metal hydroxides, e.g., sodium or potassium hydroxide, carbonates, bicarbonates, oxides and hydrides. The reaction can be conducted in an organic solvent, such as a ketone or alcohol, or in an aqueous solvent, such as water or a mixture of water and alcohol or water and a ketone. The bis-phenoxy compound is recovered by conventional methods such as distillation or crystallization and can be purified by standard techniques.

The compositions of the invention can also include one or more additives conventionally employed with polycarbonate resins to improve the chemical and physical properties of the molded articles. The additives can be selected from among, for instance, plasticizers, antioxidants, stabilizers, mineral fillers, reinforcing agents, pigments, dyes, impact modifiers and so forth. In the typical case, the additive or additives are included in minor but effective amounts varying between about 1 and 50% by weight of the total composition.

The compositions can be prepared in various ways. In one procedure, the ingredients are tumble blended, the resultant blend is passed through an extruder at a temperature between 400 and 500°F., the extrudate is cooled, chopped into pellets and molded at between 450 and 500°F.

In an alternate procedure, the ingredients including a small portion of the polycarbonate are compounded on a roll mill at a temperature between 400 and 450°F., a major portion of the polycarbonate resin being kept in reserve, however. A homogeneous blend is produced, to which is then added, with thorough mixing, the remainder of the polycarbonate. The resultant mixture is molded at, e.g., 400 to 500°F.

## DESCRIPTION OF THE SPECIFIC EMBODIMENTS

The invention is illustrated in the following examples. These are for the purpose of showing preferred or best embodiments and are not intended to be limiting. All proportions are in parts by weight.

### EXAMPLES 1-5

The compositions noted below were prepared by compounding the ingredients on a two roll mill at 410° to 420°F., then compression molding into test parts at 440°F. for 10 minutes.

As can be seen, comparison was made between a control, consisting of only the polycarbonate resin, various other blends containing one or two of the three flame retardant ingredients with the polycarbonate resins, and a blend containing all three flame retardant ingredients in accordance with the invention.

**TABLE 1**

| Ingredients | 1 | 2 | 3 | 4 | 5 |
|---|---|---|---|---|---|
| Poly(bisphenol-A carbonate) resin | 100 | 70 | 70 | 70 | 70 |
| Poly(2,6-dimethyl-1,4-phenylene)ether resin | -- | 30 | 30 | 30 | 30 |
| Triphenyl phosphate containing one or more isopropyl groups | -- | -- | 4 | 12 | 4 |
| 1,2-bis(2,4,6-tribromophenoxy)ethane | -- | -- | -- | -- | 4 |
| Vertical Burn Test (1/8" specimen) | | | | | |
| Seconds to quench | D,D | ND,ND | ND,ND | ND,ND | ND,ND |
| 1st ignition | 0,0 | 3,4 | 3,5 | 0,0 | 0,0 |
| 2nd ignition | >30,>30 | 14,10 | 11,16 | 2,2 | 2,3 |
| 3rd ignition | -- -- | >30,>30 | >30,>30 | 5,7 | 4,4 |

D=drips
ND=no drip

The control consisting of only poly(bisphenol-A carbonate)resin, sample 1, drips when placed near an open flame as shown, and exhibits relatively poor self-extinguishing times,particularly after the second ignition. Replacement of a minor proportion of the polycarbonate with poly(2,6-dimethyl-1,4-phenylene ether) resin avoid dripping, but the self-extinguishing times though improved are not entirely satisfactory. Addition of 4 parts of triphenyl phosphate, a known flame retardant, does not result in any noticeable further improvement. An increase to 12 parts of this material markedly reduces the self-extinguishing times, but the amount needed is undesirably large. The blend according to the invention, sample 5, gives best overall results with use of a smaller amount of triphenyl phosphate (4 parts) and 4 parts of brominated agent.

EXAMPLES 6-9

The procedure of the previous examples is repeated for the compositions noted in the Table below, in which 1,2-bis(2,3,4,5,6-pentabromophenoxy) ethane is illustrated.

TABLE 2

| Ingredients | 6* | 7* | 8 | 9 |
|---|---|---|---|---|
| Poly(bisphenol-A carbonate) resin | 100 | 70 | 70 | 70 |
| Poly(2,6-dimethyl-1,4-phenylene) ether | — | 30 | 30 | 30 |
| Triphenyl phosphate, isopropylated | — | — | 4 | 12 |
| 1,2-bis(2,3,4,5,6-pentabromo-phenoxy)ethane | 4 | 4 | 4 | 4 |
| Vertical Burn Test (1/8" specimen) | | | | |
| Seconds to quench | ND,ND | ND,ND | ND,ND | ND,ND |
| 1st ignition | 0,0 | 1,1 | 0,0 | 0,0 |
| 2nd ignition | 3,4 | 2,1 | 3,4 | 1,2 |
| 3rd ignition | 7,11 | 3,4 | 4,6 | 2,6 |

*comparison experiment

As is shown, the use of poly(2,6-dimethyl-1,4-phenylene ether)resin brings about some reduction in the overall self-extinguishing times (sample 7, versus sample 6). Even better results are achieved when all three flame retardant ingredients are present (samples 8 and 9), in accordance with the invention.

Optionally, the composition can and often do also contain an additional compound selected from among those known to synergistically enhance the effect of brominated flame retardant agents, such as compounds based on antimony or molybdenum. Particular mention is made of antimony oxide. Small amounts, for example, less than 10% by weight, are usually sufficient to even further enhance the flame retardancy of the present compositions.

All of the above-mentioned patents and/or publications are incorporated herein by reference. Obviously, other modifications and variations are possible in the light of the above disclosure. For instance, instead of poly(2,6-dimethyl-1,4-phenylene ether)resin, copolymers such as poly(2,6-dimethyl-co-2,3,6-trimethyl-1,4-phenylene ether) can be substituted. Clay filled or glass fiber reinforced counterparts of the compositions shown are also possible. It is to be understood, therefore, that changes may be made in the particular embodiments shown which are within the full intended scope of the invention defined in the appended claims.

CLAIMS:

1. A thermoplastic composition, comprising an admixture of:

(a) an aromatic polycarbonate resin; and

(b) an effective amount of a flame retardant agent comprising (i) an aromatic phosphate compound, (ii) a stable brominated compound and (iii) a polyphenylene ether resin.

2. A composition according to Claim 1, in which (b)(ii) is a brominated bisphenoxy alkane.

3. A composition according to Claim 1, in which (b)(ii) is a compound of the formula

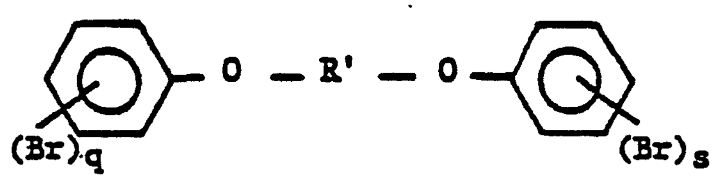

in which R' is straight or branched alkylene having from 1 to 10 carbon atoms, and q and s represent the number of bromine substituents on the respective rings and are, independently, integers from 1 to 5.

4. A composition according to Claim 1, in which the aromatic polycarbonate resin, component (a) has the formula

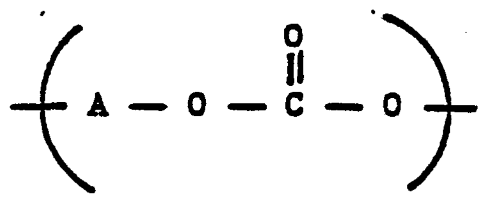

wherein A is a divalent aromatic radical of the dihydric phenol employed in the polymer producing reaction.

5. A composition according to Claim 1, in which the polycarbonate has the formula

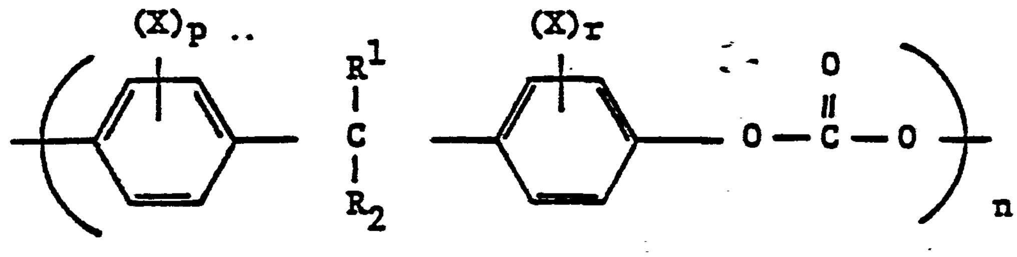

wherein $R^1$ and $R^2$ are, independently, hydrogen, (lower) alkyl or phenyl; X is, independently, (lower) alkyl, chloro, bromo or hydrogen; p and r are, independently, from 0 to 4; and n represents the total number of monomer units and is an integer at least about 30.

6. A composition according to Claim 1, in which the polycarbonate is a bisphenol-A polycarbonate resin.

7. A composition according to Claim 1, in which the aromatic phosphate compound, component (b)(i), has the formula

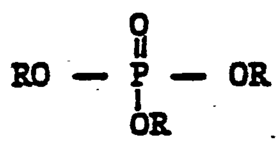

where R is the same or different and is alkyl, cycloalkyl, aryl, alkyl substituted aryl, halogen substituted aryl, aryl substituted alkyl, halogen, hydrogen or a combination of any of the foregoing, provided at least one R is aryl.

8. A composition according to Claim 7, in which the aromatic phosphate compound is triphenyl phosphate.

9. A composition according to Claim 8, in which the triphenyl phosphate constitutes a mixture of isopropylated triphenyl phosphates.

10. A composition according to Claim 1, in which the polyphenylene ether resin, component (b)(ii), has the formula

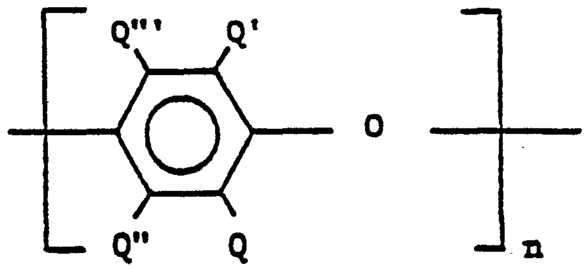

wherein Q, Q', Q" and Q"', are independently selected from the group consisting of hydrogen, halogen, hydrocarbon radicals, halohydrocarbon radicals having at least two carbon atoms between the halogen atom and the phenyl nucleus, hydrocarbonoxy radicals, and halohydrocarbonoxy radicals having at least two carbon atoms between the halogen atom and the phenyl nucleus; and n represents the total number of monomer units and is an integer at least about 20.

11. A composition according to Claim 10, in which the polyphenylene ether resin is poly(2,6-dimethyl-1,4-phenylene ether).

12. A composition according to Claim 1, in which (b)(ii) is 1,2-bis(2,4,6-tribromophenoxy) ethane.

13. A composition according to Claim 1, in which (b)(ii) is 1,2-bis(2,3,4,5,6-pentabromophenoxy) ethane.

14. A composition according to Claim 1, which contains between about 5 and about 40 percent by weight of the polyphenylene ether resin and between about 1 and about 20 percent by weight of the aromatic phosphate compound, based on the total weight of resins in the composition.

15. A composition according to Claim 1, in which the weight ratio of (b)(ii) to (b)(i) is between 8:1 and 2:1.

16. A composition according to Claim 1, which also includes a synergistic agent for (b)(ii).

17. A composition according to Claim 16, in which the synergistic agent is an antimony compound.

18. A composition according to Claim 17, in which the antimony compound is antimony oxide.